# EUROPEAN PATENT APPLICATION

(11) **EP 2 692 404 A1**
(43) Date of publication of application: **05.02.2014**
(21) Application number: 12178752.7
(22) Date of filing: 31.07.2012
(51) Int. Cl.: B01D 33/23, B01D 33/46, B01D 33/68, B01D 33/72

(54) **Self-cleaning fluid-filtering apparatus**

(71) Applicant: New Century Membrane Technology Co., Ltd., Taichung City (TW)
(72) Inventor: Kuo, Chi-Chang, Taichung City (TW)
(74) Representative: Lang, Christian

(57) **Abstract**

A self-cleaning fluid-filtering apparatus includes a container (10), a filtered-water pipe (30), a filtering unit (40) and a connecting unit (50). The filtered-water pipe is connected to a driving unit (20), and formed with apertures (32). The filtering unit includes filtering bags (41) co-axially provided on the filtered-water pipe (30), and each formed with an opening (411) in communication with a respective aperture. The connecting unit includes water-guiding elements (51) and bridging elements (53). Each water-guiding element is placed between two respective filtering bags, and formed with an annular body (510), an axial opening (511) defined in the annular body, and radial channels (54) in communication with the axial opening. Each bridging element (53) connects a respective radial channel (54) of a respective water-guiding element (51) to a respective radial channel of another respective water-guiding element (51).

## Description

### BACKGROUND OF INVENTION

### 1. FIELD OF INVENTION

The present invention relates to a fluid-filtering apparatus and, more particularly, to a self-cleaning fluid-filtering apparatus.

### 2. RELATED PRIOR ART

As disclosed in Taiwanese Patent 1291457, a conventional self-cleaning water-processing apparatus includes a container 10, a filtered-water pipe 20, a filtering unit 3 and nozzles 40.

The filtering unit 3 includes filtering films 34 and cleaning devices 35 each provided between two adjacent ones of the filtering films 34. Each of the cleaning devices 35 includes a ring 351 and a scraper 352. The scraper 352 includes blades 3521 extending from a hub. To clean the filtering films 34, the nozzles 40 produce water jets to wash some mud from the filtering films 34 and to rotate the cleaning devices 35 to scrape more mud from the filtering films 34.

However, it is difficult for the water jets to reach and wash away mud from an annular region of each of the filtering films 34 near its axis since each of the cleaning devices 35 reduces the gap between the respective filtering films 34. Thus, mud is accumulated on both sides of the annular region of each of the filtering films 34. The filtering rate is reduced. Accordingly, the life of each of the filtering films 34 is reduced.

Moreover, the rotation of each of the scrapers 352 is damped by mud rushed to the hub thereof by the water jets. Thus, mud is accumulated on both sides of the hub of each of the scrapers 352. The scrapping efficiency is reduced. Accordingly, the life of each of the scrapers 352 is reduced, and so is the life of each of the filtering films 34.

Furthermore, it requires a huge amount of water to rotate the cleaning devices 35, and this is a waste of water and inevitably increases the cost of the operation of the self-cleaning water-processing apparatus.

The present invention is therefore intended to obviate or at least alleviate the problems encountered in prior art.

### SUMMARY OF INVENTION

It is the objective of the present invention to provide an effective and inexpensive-to-use self-cleaning fluid-filtering apparatus.

To achieve the foregoing objective, the self-cleaning fluid-filtering apparatus comprising a container, a driving unit, a filtered-water pipe, a filtering unit and a connecting unit. The container includes a chamber, an inlet in communication with the chamber, and an outlet in communication with the chamber. The filtered-water pipe is connected to the driving unit placed outside the container, inserted through the container, and formed with apertures. The filtering unit includes filtering bags co-axially provided on the filtered-water pipe, and each formed with an opening in communication with a respective aperture. The connecting unit includes water-guiding elements and bridging elements. Each water-guiding element is placed between two respective filtering bags, and formed with an annular body, an axial opening defined in the annular body, and radial channels in communication with the axial opening. Each bridging element connects a respective radial channel of a respective water-guiding element to a respective radial channel of another respective water-guiding element.

The self-cleaning fluid-filtering apparatus is effective. Water is sent onto the filtering bags from the radial channels in an outward sense of a radial direction so that mud will not be accumulated on the filtering bags. The travel of the water is not hindered by any element such as a scraper.

Moreover, the cost of the use of the self-cleaning fluid-filtering apparatus is low. All of the water is directly used to wash the mud from the filtering bags without having to consume any water to drive any scraper. Hence, only a reasonable amount of water is needed for cleaning.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
Figure 1 is a cross-sectional view of a self-cleaning fluid-filtering apparatus according to the first embodiment of the present invention;
Figure 2 is an enlarged, partial, exploded view of the self-cleaning fluid-filtering apparatus shown in Figure 1;
Figure 3 is an enlarged, partial, cross-sectional view of the self-cleaning fluid-filtering apparatus shown in Figure 1;
Figure 4 is an enlarged, perspective view of a of the self-cleaning fluid-filtering apparatus Figure 1;
Figure 5 is a side view of the shown in Figure 4; and
Figure 6 is a cross-sectional view of a self-cleaning fluid-filtering apparatus according to the second embodiment of the present invention.

### DETAILED DESCRIPTION OF EMBODIMENTS

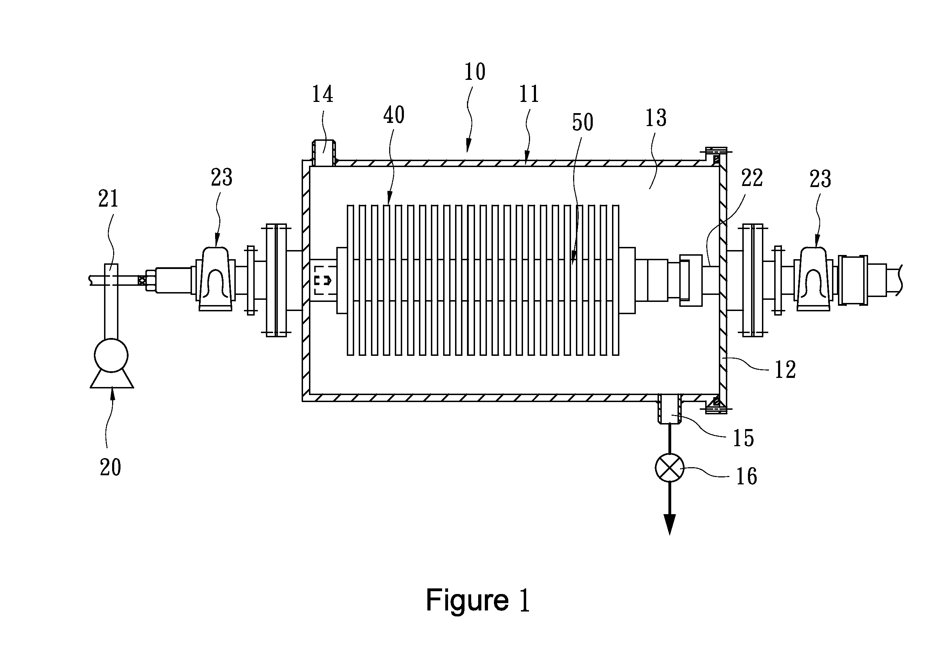

Referring to Figures 1 through 3, there is shown a self-cleaning fluid-filtering apparatus according to a first embodiment of the present invention. The self-cleaning fluid-filtering apparatus includes a container 10, a driving unit 20, a filtered-water pipe 30, a filtering unit 40 and a connecting unit 50.

The container 10 includes a tank 11 and a cover 12. The tank 11 is placed so that its axis extends horizontally. The tank 11 includes a closed end and an open end that is normally closed by the cover 12 so that a chamber 13 is defined by the tank 11 and the cover 12. The tank 11 includes an inlet 14 defined therein near the closed end and an outlet 15 defined therein near the open end. The outlet 15 is controlled by a valve 16.

The driving unit 20 includes a reducer 21, an axle 22 and two bearings 23. The reducer 21 is connected to a motor. An end of the axle 22 is connected to the reducer 21. The axle 22 is inserted through the container 10 and supported on two bearings 23 placed out of the container 20.

The filtered-water pipe 30 includes a wall 31 and apertures 32 defined in the wall 31. The filtered-water pipe 30 is inserted in the container 10 and connected to the axle 22. Negative pressure can be applied to an open end of the filtered-water pipe 30 to introduce filtered water into a filtered-water tank from the open end of the filtered-water pipe 30.

The filtering unit 40 includes filtering bags 41 coaxially placed on the filtered-water pipe 30 and separated from one another along the axis of the filtered-water pipe 30. Each of the filtering bags 41 includes two annular films 413 and 414. The annular film 413 includes an external annular edge connected to that of the annular film 414, thus defining a space 415 between the annular films 413 and 414. Between an internal annular edge of the annular film 413 and that of the annular film 414, there is defined an annular opening 411 in communication with the space 415. The annular opening 411 is in communication with a respective one of the apertures 32 of the water-providing tube 30. A film-supporting element 412 is inserted in the space 415. The film-supporting element 412 is preferably an annular plastic net. An external edge of the film-supporting element 412 is joined together with those of the annular films 413 and 414.

The connecting unit 50 includes water-guiding elements 51, seals 52 and bridging elements 53. Each of the water-guiding elements 51 is located between two adjacent ones of the filtering bags 41 around the annular openings 411. Each of the seals 52 is in contact with a respective one of the water-guiding elements 51 and a respective one of the filtering bags 41 to keep raw water out of the filtered-water pipe 30. The filtering bags 41 are retained in position as the water-guiding elements 51 are connected to one another in a manner to be described in detail later.

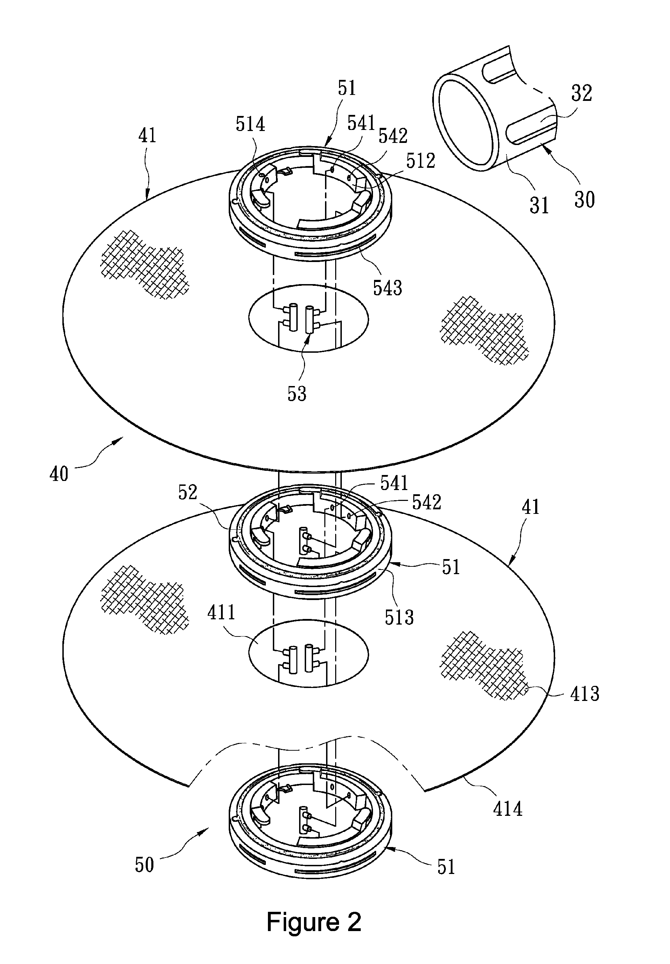

Referring to Figures 2 to 4, each of the water-guiding elements 51 includes an annular body 510, an axial opening 511 defined in the annular body 510, and radial channels 54 defined in the annular body 510. Each of the radial channels 54 extends from an internal face 512 of the annular body 510 to an external face 513 of the same.

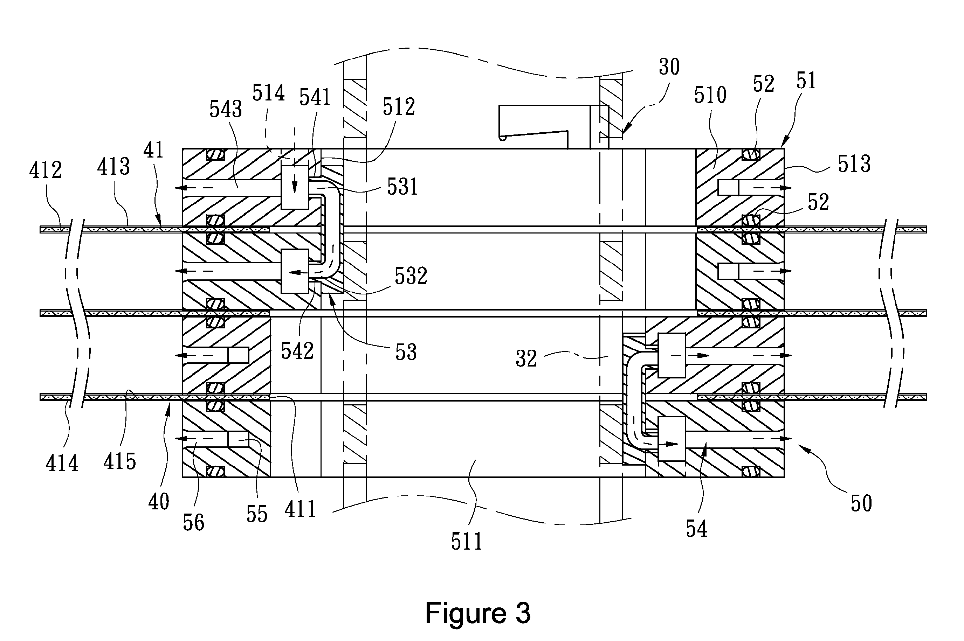

Referring to Figure 3, the radial channels 54 of each of the water-guiding elements 51 are connected to the radial channels 54 of an adjacent one of the water-guiding elements 51 via relative ones of the bridging elements 53.

For cleaning, water is introduced into the water-guiding elements 51 via the bridging elements 53. The water is sent onto an external face of each of the annular films 413 and 414 of each of the filtering bags 41 from the radial channels 54 of a respective one of the water-guiding elements 51. Mud is washed away from the filtering bags 41 by the water.

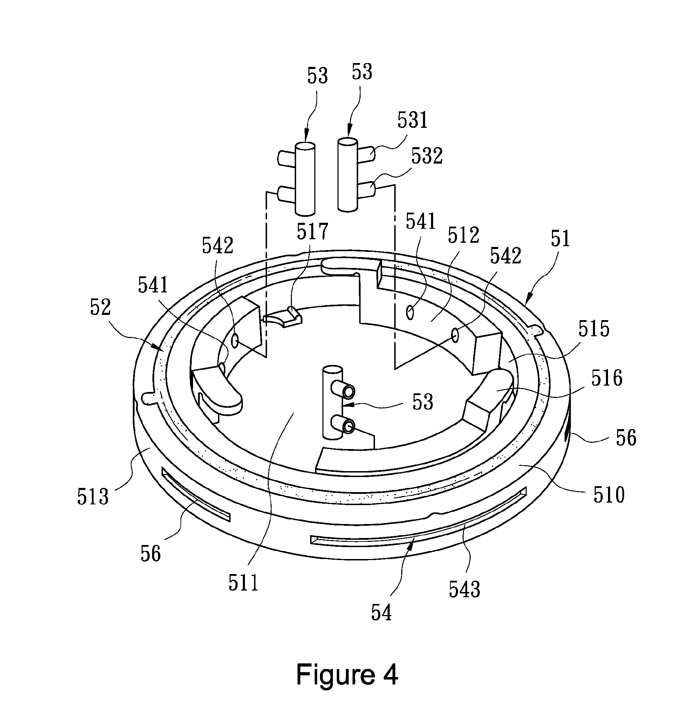

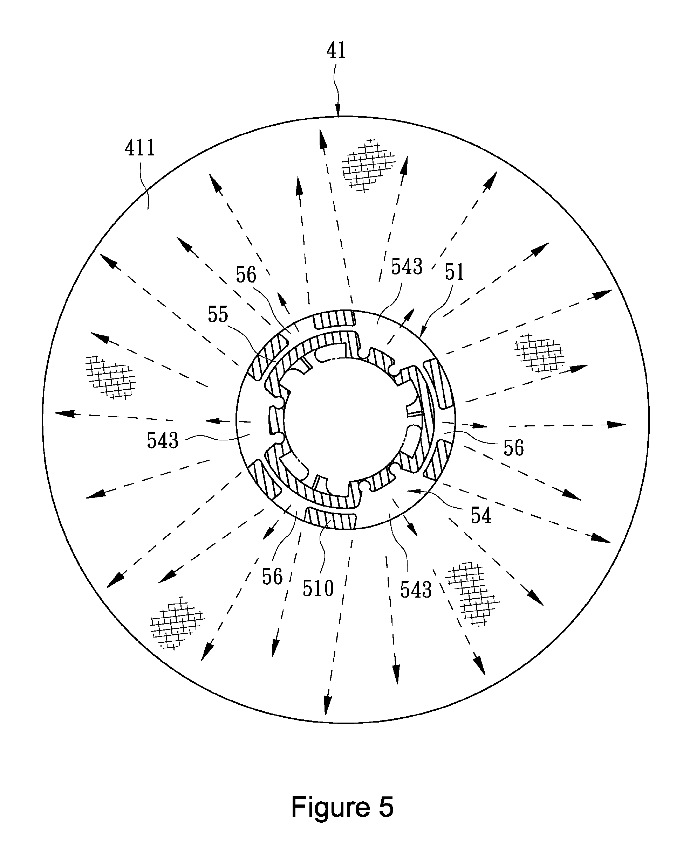

Referring to Figure 4 and Figure 5, each radial channel 54 of each water-guiding element 51 includes a leading end on the internal face 512 of the annular body 510 and a tailing end on the external face 513 of the annular body 510. The leading end of each radial channel 54 includes two apertures 541 and 542. The tailing end of each radial channel 54 includes a long slot 543.

Each bridging element 53 interconnects two adjacent water-guiding elements 51. Each bridging element 53 includes an end 531 connected to the aperture 541 of an upper water-guiding element 51 and another end 532 connected to the aperture 542 of a lower water-guiding element 51.

Referring to Figure 5, each water-guiding element 51 includes an annular channel 55 and short slots 56. The short slots 56 are defined in the external face 513 of the annular body 510. Each short slot 56 is placed between two adjacent long slots 543. The annular channel 55 is defined in and along the annular body 510. The annular channel 55 is in communication with all of the radial channels 54 and all of the short slots 56. The radial channels 54 and the short slots 56 are preferably sector-shaped in a cross-sectional view taken in a plane extending perpendicular to the axis of the annular body 510.

Referring to Figure 4, each water-guiding element 51 includes recesses 515, hooks and tabs 517. The recesses 515 are defined in the internal face 512 of the annular body 510. The hooks 516 are formed on the internal face 512 of the annular body 510. The tabs 517 are formed on the internal face 512 of the annular body 510. The hooks 516 are placed near an end of the annular body 510 while the tabs 517 are placed near an opposite end of the annular body 510. Each hook 516 is placed between two adjacent recesses 515.

In assembly, the hooks 516 of a lower water-guiding element 51 are inserted through the recesses 515 of an upper water-guiding element 51.

Then, the lower and upper water-guiding elements 51 are rotated relative to each other. Thus, the hooks 516 of the lower water-guiding element 51 are engaged with the tabs 517 of the upper water-guiding element 51.

Referring to Figure 2 and Figure 3, only the first water-guiding element 51 of the connecting unit 50 includes a longitudinal aperture 514 defined therein. The longitudinal aperture 514 is placed in a side of the annular body 510 of the first water-guiding element 51.

The filtering of the raw water into filtered water will not be described in detail for being conventional and not the spirit of the present invention. Only the washing of mud from the filtering bags 41 will be described in detail.

Referring to Figures 3 to 5, it is assumed that there is mud on the filtering bags 41 and the fluid-filtering rate is reduced. The raw water is sent from the tank 10 into one of the radial channels 54 of the first water-guiding element 51 via the longitudinal aperture 514. In the first water-guiding element 51, the raw water is sent into the other radial channels 54 and the short slots 56 via the annular channel 55. Some of the raw water is sent out of the long slots 543 and the short slots 56 to wash mud away from two adjacent filtering bags 41 in an outward sense in a radial direction. The other raw water is sent from the radial channels 54 of the first water-guiding element 51 into the radial channels 54 of the second water-guiding element 51 via the respective bridging elements 53.

In the second water-guiding element 51, the raw water is sent from the other radial channels 54 into the short slots 56 via the annular channel 55. Some of the raw water is sent out of the long slots 543 and the short slots 56 to wash mud away from the adjacent filtering bags 41 in an outward sense of a radial direction. The other raw water is sent from the radial channels 54 of the second water-guiding element 51 into the radial channels 54 of the third water-guiding element 51 via the respective bridging elements 53.

The foregoing process is repeated so that the raw water is sent to all of the water-guiding elements 51 via the bridging elements 53 while the raw water is sent out of the long slots 543 and the short slots 56 of all of the water-guiding elements 51. Thus, the mud is washed away from all of the filtering bags 41 by the raw water.

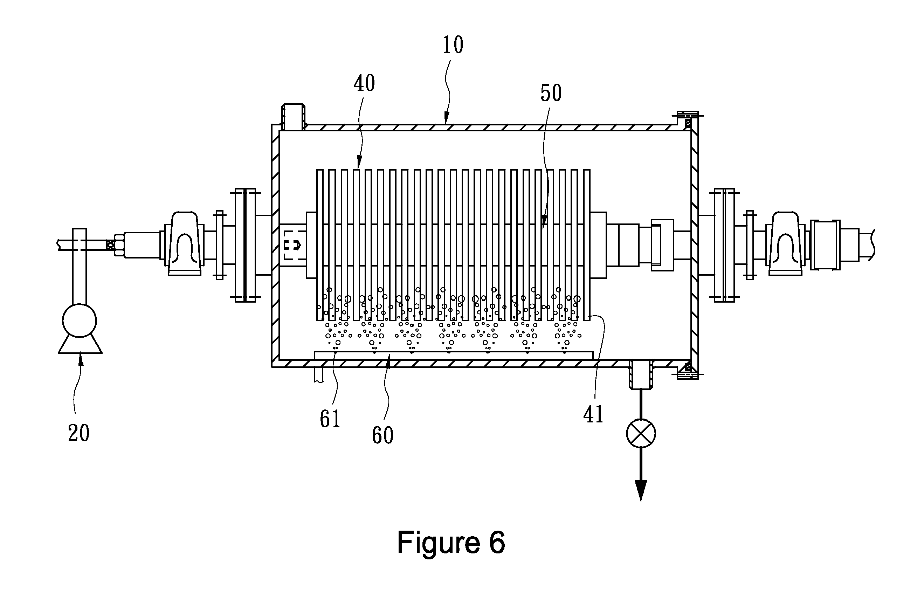

Referring to Figure 6, there is shown a self-cleaning fluid-filtering apparatus according to a second embodiment of the present invention. The second embodiment is identical to the first embodiment except including an air pipe 60 in addition to the container 10, the driving unit 20, the filtered-water pipe 30, the filtering unit 40 and the connecting unit 50. The air pipe 60 is placed in the container 10. The axis of the air pipe 60 extends parallel to the axis of the tank 11. The air pipe 60 includes an end inserted through the tank 11 and connected to an air pump (not shown). The air pipe 60 includes vents 61 defined therein and placed along the axis. Pressurized air is sent out of the vents 61 to wash mud from the filtering bags 41. Furthermore, bubbles are produced when the pressurized air meets the raw water. The bubbles are believed to be useful in washing away mud from the filtering bags 41.

As discussed above, the self-cleaning fluid-filtering apparatus of the present invention exhibits at least two advantages over the self-cleaning water-processing apparatus of the prior art.

At first, the self-cleaning fluid-filtering apparatus of the present invention washes mud from the filtering bags 41 better than the self-cleaning water-processing apparatus of the prior art. In the present invention, water is sent onto the filtering bags 41 in an outward sense of a radial direction so that the mud will not be accumulated on the filtering bags 41. In the prior art, water is sent onto the filtering bags in an inward sense of a radial direction so that the mud will be accumulated on the filtering bags. In the present invention, water is sent onto the filtering bags 41 without any interference. In the prior art, water sent onto the filtering bags is hindered by the scrapers.

Secondly, the self-cleaning fluid-filtering apparatus of the present invention consumes less water than the self-cleaning water-processing apparatus of the prior art. In the present invention, all water is directly used to wash mud from the filtering bags 41. Hence, only a reasonable amount of water is needed for cleaning. In the prior art, some water is directly used to wash mud from the filtering bags 41 while other water is used to rotate the scrapers to scrape mud from the filtering bags; however, the rotation of the scrapers is inevitably hindered by mud accumulated on the filtering bags. Hence, an unreasonably large amount of water is needed for cleaning.

## Claims

1. A self-cleaning fluid-filtering apparatus, comprising a container (10), a driving unit (20) placed outside the container, a filtered-water pipe (30) connected to the driving unit, inserted through the container, and formed with apertures (32), a filtering unit (40) including filtering bags (41) co-axially provided on the filtered-water pipe (30), and each formed with an opening (411) in communication with a respective one of the apertures (32), and comprising a connecting unit (50) including water-guiding elements (51) each placed between two respective ones of the filtering bags (41), and formed with an annular body (510), an axial opening (511) defined in the annular body, **characterized in that:**
each of the water-guiding elements (51) including radial channels (54) in communication with the axial opening (511); and
bridging elements (53) each for connecting a respective one of the radial channels (54) of an adjacent one of the water-guiding elements (51) to a respective one of the radial channels (54) of another adjacent one of the water-guiding elements (51).

2. The self-cleaning fluid-filtering apparatus according to claim 1, wherein the connecting unit (50) includes seals (52) each sandwiched between a respective one of the water-guiding elements (51) and a respective one of the filtering bags (41).

3. The self-cleaning fluid-filtering apparatus according to claim 1, wherein the first water-guiding element (51) includes a longitudinal aperture (514) in communication with one of the radial channels (54) thereof.

4. The self-cleaning fluid-filtering apparatus according to claim 1, wherein each of the radial channels (54) includes first and second apertures (541), (532) on an internal face of the annular body (510) and a long slot (543) on an external face of the annular body (510).

5. The self-cleaning fluid-filtering apparatus according to claim 4, wherein each of the bridging elements (53) connects the first aperture (541) of a respective one of the radial channels (54) of an adjacent one of the water-guiding elements (51) to the second aperture (542) of a respective one of the radial channels (54) of another adjacent one of the water-guiding elements (51).

6. The self-cleaning fluid-filtering apparatus according to claim 4, wherein each of the water-guiding elements (51) includes an annular channel (55) in communication with the radial channels (54).

7. The self-cleaning fluid-filtering apparatus according to claim 6, wherein each of the water-guiding elements (51) includes short slots (56) in communication with the annular channel (55).

8. The self-cleaning fluid-filtering apparatus according to claim 7, wherein the short and long slots (543, 56) are sector-shaped.

9. The self-cleaning fluid-filtering apparatus according to claim 1, wherein each of the water-guiding elements (51) includes recesses (515), tabs (517) formed thereon, and hooks (516) inserted through a respective one of the recesses (515) of an adjacent one of the water-guiding elements (51) and engaged with a respective one of the tabs (517) of the same.

10. The self-cleaning fluid-filtering apparatus according to claim 1, including an air pipe (60) for spraying air onto the filtering bags (41).
